(19) **Europäisches Patentamt / European Patent Office / Office européen des brevets**

(11) **EP 2 961 082 B1**

(12) **EUROPEAN PATENT SPECIFICATION**

(45) Date of publication and mention
of the grant of the patent:
**06.03.2019   Bulletin 2019/10**

(51) Int Cl.:
*H04B 1/10* *(2006.01)*    *H04B 7/155* *(2006.01)*
*H04B 7/185* *(2006.01)*

(21) Application number: **13875667.1**

(22) Date of filing: **22.11.2013**

(86) International application number:
**PCT/JP2013/081514**

(87) International publication number:
**WO 2014/129038 (28.08.2014 Gazette 2014/35)**

(54) **RELAY CONTROL STATION, REPEAT ER, AND METHOD FOR REPRESSING INTERFERENCE**

RELAISSTEUERSTATION, REPEATER UND VERFAHREN ZUR UNTERDRÜCKUNG VON
INTERFERENZEN

STATION DE COMMANDE DE RELAIS, RÉPÉTEUR, ET PROCÉDÉ POUR UNE RÉPRESSION DE
BROUILLAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.02.2013   JP 2013032222**

(43) Date of publication of application:
**30.12.2015   Bulletin 2015/53**

(73) Proprietor: **Mitsubishi Electric Corporation
Tokyo 100-8310 (JP)**

(72) Inventors:
• **TANI, Shigenori
Tokyo 100-8310 (JP)**
• **MOTOYOSHI, Katsuyuki
Tokyo 100-8310 (JP)**

• **FUJIMURA, Akinori
Tokyo 100-8310 (JP)**

(74) Representative: **Pfenning, Meinig & Partner mbB
Patent- und Rechtsanwälte
Theresienhöhe 11a
80339 München (DE)**

(56) References cited:
**WO-A1-2012/147753    JP-A- H0 541 683
US-A1- 2002 142 725    US-A1- 2012 058 719
US-A1- 2012 314 824**

• **JOHN J. KNAB: 'Transponder Power
Minimization Utilizing Optimum Channelizer
Gains' IEEE TRANSACTIONS ON AEROSPACE
AND ELECTRONIC SYSTEMS vol. 48, no. ISSUE,
January 2012, pages 729 - 736, XP011433845**

**Description**

Field

The present invention relates to a relay control station, a repeater, and an interference suppressing method of a satellite communication system.

Background

A satellite communication system is introduced that performs communication between two points of the ground and a ship, an airplane, or the like on the earth using an artificial satellite or the like operating in earth orbit in the outer space. In such a system, a repeater mounted on the artificial satellite receives a signal transmitted from a communication apparatus on the earth and transmits (relays) the signal to another communication apparatus on the earth to realize the communication between the two points.

In recent years, according to the increase in the capacity of a satellite communication system, multi-beam data transmission of performing data transmission with a different beam for each region has been examined. When the multi-beam data transmission is realized by a through-repeater satellite by the conventional analog frequency conversion, frequencies necessary for uplink (from a ground station to a satellite) data transmission need to be secured by the number of beams.

Therefore, to effectively use limited frequencies, a channelizer technology has been examined that can greatly reduce, in a satellite, an uplink required signal bandwidth by, after demultiplexing received signals into minimum frequency units, allocating the demultiplexed signals to beams of transmission destinations and multiplexing the allocated signals.

According to the diversification of the satellite communication system, it is assumed that transceivers having a plurality of different antenna diameters relay signals via a repeater. Moreover, it is assumed that the repeater relays signals at different transmission rates generated in bursts such as sound and moving images.

Specifically, Patent Literature 1 described below discloses a technology for, in the channelizer described above, appropriately controlling gains of signals to effectively use transmission power of a repeater while satisfying the required quality for each line.

Non Patent Literature 1 described below discloses a technology for improving deterioration in signal quality due to inter-modulation distortion of a transmission amplifier mounted on a repeater using the gain control described above.

US 2012/0314824 A1 refers to an interference wave suppressing apparatus, a relay apparatus, a relay system, and a interference wave suppressing method. The interference wave suppressing apparatus includes a digital demultiplexing unit configured to demultiplex a reception signal into demultiplexed signals having predetermined bandwidth, an interference-wave detecting unit configures to determine, for each of the demultiplexed signals, based on a power value, whether an interference wave is present, an interference-wave suppressing unit configured to change a signal value of the demultiplexed signal, in which the interference-wave detecting unit determines that an interference wave is present, to a value equal to or smaller than a predetermined value, output the demultiplexed signal, in which the interference-wave detecting unit determines that an interference wave is absent, and a digital multiplexing unit configured to multiplex the signals output from the interference-wave suppressing unit.

US 2002/0142725 A1 refers to an active interference suppressor utilizing recombinant transmultiplexing. An active signal suppression system utilizes multi-rate recombinant transmultiplexer to suppress or cancel an undesired signal from a wide-band composite signal to be applied to an analog to digital converter. The transmultiplexer includes a first demultiplexer, multiplier, switch, and multiplexer. The demultiplexer and multiplexer each have a poly phase filter and Fast Fourier Transform pair which permit channelization and facilitate the generation of a cancellation signal for suppression of the undesired signal. Signal cancellation circuit receives the composite signal at one input and the cancellation signal at another input. A minimum mean square estimation circuit and a second demultiplexer are included in a feedback circuit to provide error correction. A detector and automatic gain control circuit is coupled to the first demultiplexer and the multiplier to detect the undesired signal for controlling the switch and to provide automatic gain control to a variable gain amplifier connected to the signal cancellation circuit.

US 2012/0058719 A1 refers to a method of operating a repeater in a communications system, wherein a repeater gain to be used for the amplification of a signal is adjusted in dependence on an estimate of an interference by the repeater and by the receiver. The interference at the receiver is feed back to the relay node.

Citation List

Patent Literature

Patent Literature 1: United States Patent Application Publication No. 2004/0071236

Non Patent Literature

Non Patent Literature 1: John J. Knab (Defense Information Systems Agency) "Transponder Power Minimization Utilizing Optimum Channelizer Gains" IEEE Transactions on Aerospace and electronic systems, Vol. 48, No 1 Jan 2012.

Summary

Technical Problem

According to the widening of the band of a satellite communication system and the expansion of a service area, a repeater is likely to receive an unintended signal due to interference from another system, a failure of a transmitter, or the like besides a signal transmitted from a transmission station. However, in the conventional technology (Patent Literature 1), because the gain is controlled for each band of a signal transmitted by the transmitter, when an interference wave in a band narrower than a signal band is received, it is difficult to suppress only a demultiplexed signal including the interference wave. Therefore, there is a problem in that the transmission power of the repeater cannot be effectively utilized because an unnecessary interference wave is relayed.

The present invention has been devised in view of the above and it is an object of the present invention to obtain a relay control station, a repeater, and an interference suppressing method capable of effectively utilizing the transmission power of the repeater while improving the reception quality of a receiver.

Solution to Problem

The object of the present invention is solved by the independent claims. Advantageous embodiments are described by the dependent claims.

In order to solve the above problems and achieve the object, an aspect of the present invention is a relay control station that controls a repeater in a communication system in which a transmitter transmits data to a receiver serving any beam via the repeater including one or more beams, the relay control station including: a power control unit that determines, on a basis of a power value of each of demultiplexed signals measured by the repeater and an expected power value of each of the demultiplexed signals, a gain control amount provisional value for each of the demodulated signals and calculates a gain control value of each of the demultiplexed signals for the repeater on a basis of a ratio between a sum of power estimation values of all the demultiplexed signals obtained when the gain control amount provisional value is applied and a sum of power values of all the demultiplexed signals measured by the repeater and the gain control amount provisional value; and a repeater interface unit that notifies the repeater of the gain control amount calculated by the power control unit.

Advantageous Effects of Invention

The relay control station, the repeater, and the interference suppressing method according to the present invention attain an effect that it is possible to effectively utilize the transmission power of the repeater while improving the reception quality of a receiver.

Brief Description of Drawings

FIG. 1 is a diagram showing a configuration example of a satellite communication system in a first embodiment.
FIG. 2 is a diagram showing a configuration example of a repeater in the first embodiment.
FIG. 3 is a diagram showing a configuration example of a control station in the first embodiment.
FIG. 4 is a diagram showing electric powers of signals in a gain control unit in the first embodiment.
FIG. 5 is a diagram showing a state in which inter-modulation distortion occurs.
FIG. 6 is a diagram showing electric powers of signals in a gain control unit in a second embodiment.
FIG. 7 is a diagram showing a configuration example of a repeater in the second embodiment.

Description of Embodiments

Exemplary embodiments of a relay control station, a repeater, and an interference suppressing method according to the present invention are explained in detail below with reference to the drawings. Note that the present invention is not limited by the embodiments.

First Embodiment.

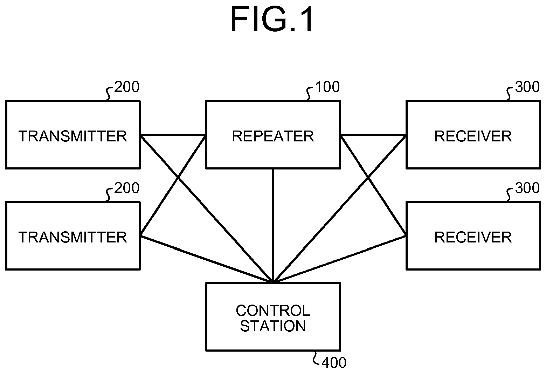

FIG. 1 is a diagram showing a configuration example of a satellite communication system in the present embodiment. The satellite communication system is configured from a repeater 100, transmitters 200, receivers 300, and a control station 400. The repeater 100 is connected to the transmitters 200, the receivers 300, and the control station 400, the transmitters 200 are connected to the repeater 100 and the control station 400, the receivers 300 are connected to the repeater 100 and the control station 400, and the control station 400 is connected to the repeater 100, the transmitters 200, and the receivers 300 by radio. Note that, in FIG. 1, two transmitters 200 and two receivers 300 are connected. However, this is an example. The number of the connected transmitters and receivers is not limited to two.

The configurations of the repeater 100 and the control station 400 configuring the satellite communication system are explained. Note that the transmitters 200 and the receivers 300 are not characteristics in the present invention and can have conventionally used configurations; therefore, detailed explanation of their configurations is omitted.

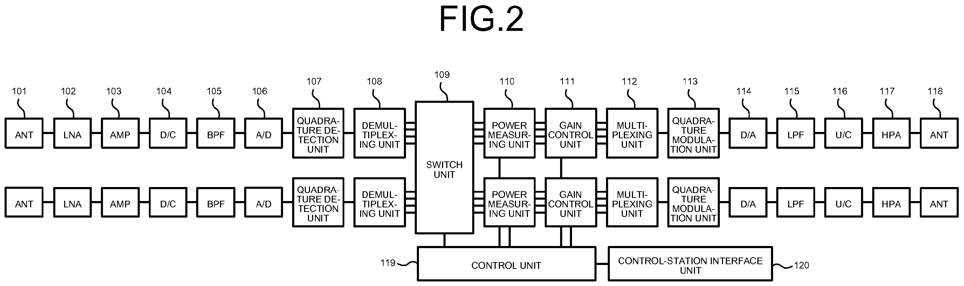

FIG. 2 is a diagram showing a configuration example of the repeater 100 in the present embodiment. The repeater 100 includes reception antennas (ANT) 101, low-noise amplifiers (LNA) 102, variable amplifiers (AMP) 103, down-converters (D/C) 104, band-pass filters (BPF) 105, analog-digital converters (A/D) 106, quadrature detection units 107, demultiplexing units 108, a switch unit 109, power measuring units 110, gain control units 111, multiplexing units 112, quadrature modulation units 113, digital-analog converters (D/A) 114, low-pass filters (LPF) 115, up-converters (U/C) 116, high-power amplifiers (HPA) 117, transmission antennas (ANT) 118, a control unit 119, and a control-station interface unit 120.

In FIG. 2, the components other than the switch unit 109, the control unit 119, and the control-station interface unit 120 are shown in two systems. This is for a configuration for processing signals included in one beam per system. Note that the configuration shown in FIG. 2 is an example. The number of systems is not limited to two and can be any number according to the number of beams required by the satellite communication system.

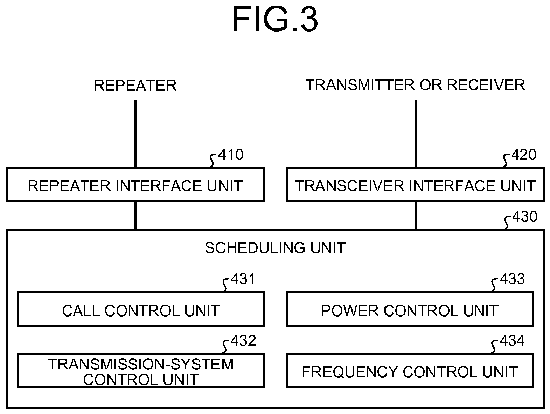

The configuration of the control station 400 is explained. The control station 400 is a relay control station that controls the gain and the like in the gain control unit 111 of the repeater 100 in the satellite communication system. FIG. 3 is a diagram showing a configuration example of the control station 400 in the present embodiment. The control station 400 includes a repeater interface unit 410, a transceiver interface unit 420, and a scheduling unit 430. The scheduling unit 430 includes a call control unit 431, a transmission-system control unit 432, a power control unit 433, and a frequency control unit 434.

The operations of the devices performed when the transmitter 200 transmits data to the receiver 300 via the repeater 100 and a control method of the control station 400 for controlling the repeater 100 in the satellite communication system shown in FIG. 1 are explained.

First, the transmitter 200 encodes and modulates data to be transmitted and transmits the data to the repeater 100. As a communication system between the transmitter 200 and the repeater 100, any system can be used. If a communication system is determined in advance between the transmitter 200 and the receiver 300, the receiver 300 can demodulate and decode a signal. The frequency at which the transmitter 200 transmits a signal conforms to the frequency position notified in advance from the control station 400 explained below.

In the repeater 100, the reception antenna 101 receives a signal from the transmitter 200 and the low-noise amplifier 102 amplifies the signal. Thereafter, the variable amplifier 103 adjusts the level such that the signal power output to the post stage is constant. After the down-converter 104 converts the carrier frequency into an intermediate frequency, the band-pass filter 105 suppresses a high-frequency component. The analog-digital converter 106 converts the analog signal into a digital signal. The quadrature detection unit 107 converts the signal having the intermediate frequency into a baseband signal. The demultiplexing unit 108 demultiplexes the baseband signal into M number of signals. For example, when a signal having a frequency bandwidth of 10 MHz is demultiplexed into signals having a frequency bandwidth of 1 MHz, ten demultiplexed signals are generated (M=10).

The switch unit 109 selects routes of the demultiplexed signals according to the route information designated from the control unit 119 explained below and outputs the signals to the power measuring unit 110. For example, in FIG. 2, two systems from the reception antenna 101 to the analog-digital converter 106 and from the power measuring unit 110 to the transmission antenna 118 are shown. When the systems are respectively represented as a system A and a system B, the system A receives a signal from a beam that covers the region A as a coverage area and the system B receives a signal from a beam that covers the region B as a coverage area. When a signal of a part of the region A is relayed to the region B, the switch unit 109 outputs a part of the signals demultiplexed in the system A to the power measuring unit of the system B according to the route information to thereby realize relay among a plurality of different beams.

The power measuring unit 110 measures electric power of the (M number of) demultiplexed signals output from the switch unit 109.

As measures taken when an uplink interference wave is strong and the analog-digital converter 106 is saturated, an AGC (Automatic Gain Control) can be provided at a pre-stage of the analog-digital converter 106. In this case, actually received signal power can be accurately measured by adding the control amount of the AGC and the measurement value of the power measuring unit 110.

The gain control unit 111 changes the amplitude of the demultiplexed signals according to the gain control amount notified from the control unit 119 explained below. The multiplexing unit 112 multiplexes the M number of demultiplexed signals. After the quadrature modulation unit 113 converts the baseband signal into the intermediate frequency, the digital-analog converter 114 converts the digital signal into an analog signal. The low-pass filter 115 suppresses a high-frequency component. After the up-converter 116 converters the intermediate frequency into the carrier frequency, the high-power amplifier 117 amplifies the signal. The transmission antenna 118 then transmits the signal to the receiver 300.

The control unit 119 retains the power value measured by the power measuring unit 110 and the control information (abnormality detection information, etc.) generated by the components of the repeater 100 and notifies the control station 400 of the power value and the control information via the control-station interface unit 120. The control-station interface unit 120 receives the control information (the gain control amount, the route information, etc. explained above) transmitted from the control station 400 and the control unit 119 sets the control information in the components.

The receiver 300 demodulates and decodes the signal received from the repeater 100 and obtains the data. Note that, if the communication system is determined in advance between the receiver 300 and the transmitter 200, the data can be correctly restored.

The control station 400 performs transmission and reception of control information between the repeater interface unit 410 and the repeater 100. The transceiver interface unit 420 performs transmission and reception of the control information with the transmitter 200 or the receiver 300. The control information is control information used or generated by the scheduling unit 430 explained below. The scheduling unit 430 generates control information related to communication of the repeater 100, the transmitter 200, and the receiver 300. Specific control content is explained in explanation of the components.

In the scheduling unit 430, the call control unit 431 instructs, according to a transmission request received from the transmitter 200, the transmission-system control unit 432, the power control unit 433, and the frequency control unit 434 explained below to generate control information required for communication establishment. Note that the call control unit 431 can reject the transmission request when the frequency and electric power that the repeater 100 can relay exceed allowable values. When priority information is included in the transmission request or when priority is determined in advance for the transmitter 200 that has transmitted the transmission request, the call control unit 431 can perform outgoing/incoming call control conforming to the priority.

The transmission-system control unit 432 determines, according to the transmission request, a transmission system necessary for the communication establishment. The transmission system indicates, for example, the modulation system and the coding ratio of error correction. The transmission-system control unit 432 can determine a necessary transmission system from, for example, the diameter of antennas mounted on the transmitter 200 and the receiver 300 and the error rate of a requested signal. Further, when the reception quality is deteriorated during the communication establishment because of rain attenuation or an interference wave from another system, the transmission-system control unit 432 can dynamically change the transmission system by periodically receiving notification of the reception quality (e.g., the signal-to-interference-plus-noise ratio and the demodulation/decoding result) from the receiver 300.

The power control unit 433 determines, according to the transmission request, the transmission power of the transmitter 200 necessary for the communication establishment and the gain control amount changed by the gain control unit 111. The power control unit 433 notifies the gain control unit 111 of the repeater 100 of the determined gain control amount via the repeater interface unit 410.

Note that, in the repeater 100, the gain control amount is notified to the gain control unit 111 via the control-station interface unit 120 and the control unit 119. When information is transmitted and received between the components in the scheduling unit 430 of the control station 400 and the components in the repeater 100, specifically, communication is performed via the repeater interface unit 410 of the control station 400 and the control-station interface unit 120 and the control unit 119 of the repeater 100. However, the communication is omitted in the following explanation.

The frequency control unit 434 allocates, according to the transmission request, unallocated frequencies to the transmitter 200 and the receiver 300, notifies the transmitter 200 and the receiver 300 of the frequency allocation information, and notifies the switch unit 109 of the repeater 100 of the route information via the repeater interface unit 410. Note that, when priority information is included in the transmission request or priority is determined in advance for the transmitter 200 that has transmitted the transmission request, the frequency control unit 434 can perform frequency allocation control conforming to the frequency. The frequency control unit 434 can reduce the frequency allocation bandwidth of the transmitter 200 to which a frequency is already allocated and which has priority lower than the priority of the transmitter 200 that has transmitted the transmission request and preferentially allocate a frequency to the transmitter 200 having a higher priority.

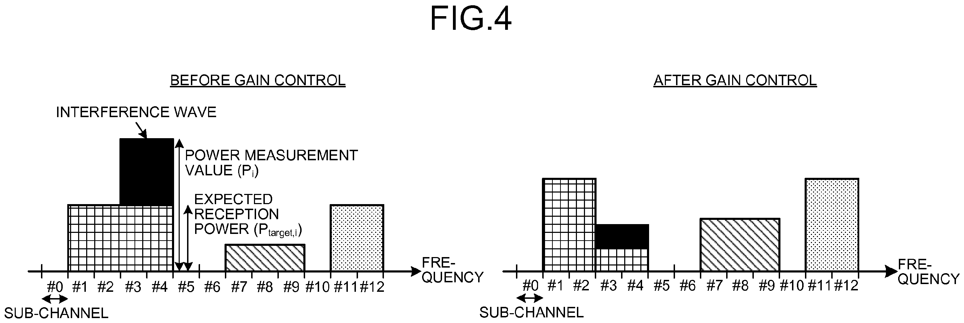

A method of determining a gain control amount for the gain control unit 111 of the repeater 100 in the power control unit 433, which is a characteristic of the present embodiment, is explained with reference to FIG. 4. FIG. 4 is diagram showing electric powers of signals in the gain control unit 111 in the present embodiment. A sub-channel shown in FIG. 4 means a band that the demultiplexing unit 108 demultiplexes. In FIG. 4, signals indicated by sub-channels #1 to #4, #7 to #9, and #11 to #12 are relay target signals. An interference wave is added to sub-channels #3 to #4. When gain control is not performed, because the interference wave is directly relayed to the receiver 300, the reception quality in the receiver 300 is deteriorated. In addition, because a part of the electric power required by the repeater 100 for transmission is wasted by the interference wave, the transmission power cannot be effectively utilized. Therefore, the power control unit 433 determines, on the basis of the power values of the demultiplexed signals (sub-channels) measured by the power measuring unit 110, a gain control amount according to a method (a procedure) explained blow.

Procedure (1) The power control unit 433 calculates a gain $G_{ai}$, which is a provisional value of a gain control amount, from the reception power and the expected reception power of an i-th sub-channel.

Procedure (2) The power control unit 433 calculates a gain $G_{bi}$ for redistributing surplus electric power due to the gain control value in the procedure (1) to all the sub-channels.

The gain $G_{ai}$ calculated in the procedure (1) is calculated as indicated by the following Formula (1).

$$G_{ai} = \alpha \left\{ \frac{P_{target,i}}{p_i} \right\}^{\beta} \tag{1}$$

In Formula (1), $\alpha$ represents an adjustment coefficient, which is determined according to the priority of the transmitter 200. $P_{target}$ represents expected reception power (an expected power value) in the i-th sub-channel. The expected reception power $P_{target}$ can be estimated by notifying the control station 400 of the power value measured when the power measuring unit 110 does not receive interference. Alternatively, the expected reception power $P_{target}$ can be estimated from the transmission power of the transmitter 200 selected by the power control unit 433, the antenna gain calculated from the antenna diameter, the free space loss, and the like. $P_i$ represents a power measurement value (a power value) in the i-th sub-channel. The power control unit 433 only has to acquire the result measured by the power measuring unit 110 as explained above. $\beta$ represents an adjustment coefficient different from $\alpha$. As $\beta$ is set to a larger value, a gain of the sub-channels including the interference wave decreases and the interference suppression effect increases. However, the signal power included in the i-th sub-channel is attenuated simultaneously with the interference wave. Therefore, $\beta$ is adjusted to a value that can be demodulated in the receiver 300.

Note that the adjustment coefficients $\alpha$ and $\beta$ can be changed by the interference suppression performance of the receiver 300. For example, when the receiver 300 has a function of subjecting a reception signal to FFT (Fast Fourier Transform) and suppressing the interference wave at frequency granularity finer than a sub-channel unit or equalizing the interference wave with another system, the adjustment coefficients $\alpha$ and $\beta$ can be adjustment coefficients that do not reduce a signal transmitted by the transmitter 200.

The gain $G_{bi}$ calculated in the procedure (2) is calculated as indicated by the following Formula (2).

$$G_{bi} = \gamma \frac{\sum_{k=0}^{K} P_k}{\sum_{k=0}^{K} G_{ak} P_k} G_{ai} \tag{2}$$

In Formula (2), $\gamma$ represents an adjustment coefficient. If $\gamma=1$, the sum of the signal powers of the sub-channels is equal before the gain control and after the gain control. On the other hand, when it is desired to dynamically change the coverage area of a beam emitted to any region, the change can be realized by adjusting $\gamma$. K represents the number of sub-channels including signals. In the case of FIG. 4, K=9. The denominator represents electric power of all the sub-channels obtained when the gain calculated in the procedure (1) is used. The numerator represents electric power of all the sub-channels obtained before the gain control is performed. Therefore, by setting the gain as indicated by Formula (2), the power control unit 433 can reduce the signal power of the sub-channels including the interference wave while keeping the entire electric power constant and allocate surplus electric power to the other sub-channels.

Note that, when the gain $G_{bi}$ is applied in the repeater 100, in the receiver 300, it is likely that the reception signal power suddenly fluctuates and a continuous error due to divergence and out-of-synchronization of AGC (Automatic Gain Control) occurs. Therefore, when changing the value of the gain $G_{bi}$, the power control unit 433 can control the repeater interface unit 410, cause the gain control unit 111 to increase or reduce the gain at any step width, and notify, from the repeater interface unit 410, the repeater 100 to bring the gain $G_{bi}$ close to the gain after the change. For example, when the gain is increased by 3 decibels, if any step width (specified value) is 1 decibel, it is possible to relax the power fluctuation due to the gain control by notifying the repeater 100 to dividedly increase the gain three times by 1 decibel at a time.

Note that, in the present embodiment, the power control unit 433 of the control station 400 calculates the gain control amount for the repeater 100 and notifies the repeater 100 of the gain control amount. However, a part or all of the functions of the power control unit 433 can be incorporated in the repeater 100. Consequently, time required for communication of the control information between the control station 400 and the repeater 100 is reduced. Therefore, it is possible to quickly cope with appearance/disappearance of the interference wave.

As explained above, in the present embodiment, in a process in which the transmitter transmits data to the receiver via the repeater, the repeater measures the electric powers of demultiplexed signals. In the control station that controls the gain and the like of the repeater, the power control unit acquires the power measurement values for the demultiplexed signals measured by the repeater, estimates an interference amount in an uplink (transmission from the transmitter to the repeater) from the power measurement values, and controls, on the basis of the reception powers and the expected reception powers of the demultiplexed signals, the gains of the demultiplexed signals to suppress the interference wave. Consequently, when the interference wave is included in any demultiplexed signal, it is possible to reduce the gain of the demultiplexed signal, suppress, in the repeater, the interference wave received in the uplink, and relay the demultiplexed signal. Therefore, it is possible to improve the reception quality of a signal in the receiver. The transmission power of the repeater required when relaying the interference wave, that is, surplus electric power obtained by a gain reduction can be redistributed to the other signals. Therefore, it is possible to effectively utilize the transmission power of the repeater.

Second Embodiment.

In the first embodiment, the gain is controlled such that the influence due to the interference wave of the uplink and the rain attenuation is reduced. However, inter-modulation distortion that occurs in the high-power amplifier 117 of the repeater 100 shown in FIG. 2 is not taken into account.

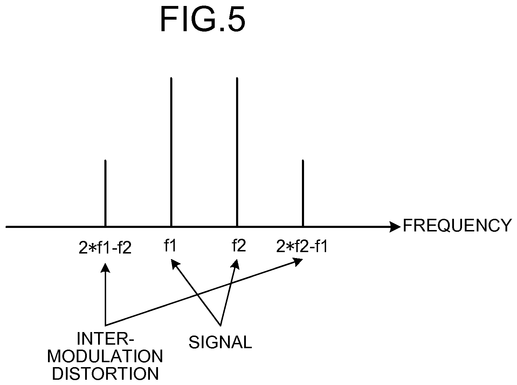

The inter-modulation distortion in the high-power amplifier 117 is explained with reference to FIG. 5. FIG. 5 is a diagram showing a state in which the inter-modulation distortion occurs. In the high-power amplifier 117, when linearity is not kept, a waveform of an output signal is deformed with respect to an input signal; therefore, a harmonic component separate from the frequency of a transmission signal occurs. When a signal is transmitted using a frequency f1 and a frequency f2 as shown in FIG. 5, the inter-modulation distortion occurs in a frequency ($2\times$f1-f2) and a frequency ($2\times$f2-f1). If the repeater 100 transmits another signal using the frequencies in which the inter-modulation distortion occurs, a problem occurs in that reception quality in the receiver 300 is deteriorated by the inter-modulation distortion. In particular, when signals in different communication systems and at different transmission rates are relayed using the same repeater, signals having a power difference of approximately several ten decibels are sometimes arranged at adjacent frequencies. Therefore, the deterioration in the reception quality due to the inter-modulation distortion cannot be ignored in a satellite communication system.

Therefore, in the present embodiment, a method of improving the reception quality of signals in the receiver 300 even when the inter-modulation distortion occurs in the high-power amplifier 117 is explained.

The configurations of the satellite communication system, the repeater 100, and the control station 400 in the present embodiment are the same as the configurations in the first embodiment. Therefore, explanation of the configurations is omitted. Note that, in the present embodiment, a method of determining a gain control amount notified by the control station 400 to the repeater 100 shown in FIG. 1 is different from the method in the first embodiment. Therefore, in the following explanation, only the difference is explained.

When receiving the power measurement values of the demultiplexed signals from the power measuring unit 110, the power control unit 433 detects the power differences among adjacent demultiplexed signals, increases the gain in order from a demultiplexed signal having the largest power difference (a demultiplexed signal having the smallest electric power with respect to an adjacent demultiplexed signal), and calculates a gain control amount to stop the gain increase at a point when the electric power is equal to the electric power of the adjacent demultiplexed signal. However, the power control unit 433 controls the gain of the demultiplexed signal such that the total transmission power after the gain increase does not exceed the maximum transmission power of the repeater 100.

Note that, when a communication system is different from a communication system of the adjacent demultiplexed signal, the power control unit 433 can provide an offset in a target power difference between the demultiplexed signal and the adjacent demultiplexed signal. For example, when there is a difference of N dB in a required signal-to-interference-plus-noise ratio with respect to a target error rate, the power control unit 433 calculates a gain control amount with which the target power difference satisfies N dB.

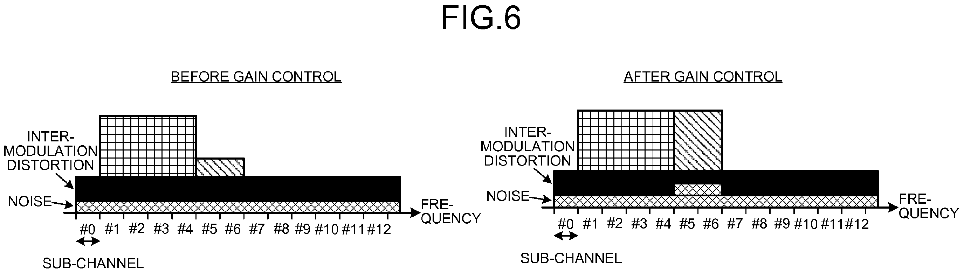

The method of determining a gain control amount in the present embodiment explained above is explained with reference to FIG. 6. FIG. 6 is a diagram showing electric powers of signals in the gain control unit 111 in the present embodiment. In a state before gain control, the signals are transmitted using sub-channels #1 to #4 and #5 to #6. In this case, inter-modulation distortion is caused by two signals. However, in FIG. 6, for simplification, it is assumed that the inter-modulation distortion is caused by behavior same as noise in an entire band. The power control unit 433 can control deterioration in reception quality due to the inter-modulation distortion by increasing the gain control amount of the sub-channels #5 to #6 to set the signal power thereof to be equal to the signal power of the sub-channel #4. Note that noise that occurs at a pre-stage of the gain control unit 111 is also emphasized by the increase in the gain. However, the signal-to-noise ratio excluding the inter-modulation distortion does not change.

Note that, in FIG. 6, the frequency characteristic of the inter-modulation distortion is not taken into account. However, actually, as explained above, the inter-modulation distortion occurs in a specific frequency. Therefore, the power control unit 433 estimates, from the power measurement values of the demultiplexed signals, the frequency at which the inter-modulation distortion occurs and notifies the frequency control unit 434 to avoid transmission at the frequency. The frequency control unit 434 can notify, concerning the frequency at which an estimated value of the inter-modulation distortion is smaller than a predetermined value, the transmitter 200 of a change in a transmission frequency and notify the switch unit 109 of a change of route information.

In some case, even if the gain control described above is performed, the target reception quality is not satisfied in the receiver 300 because of a specific apparatus failure of the repeater 100 and an unintended interference wave of a downlink. Therefore, the receiver 300 can periodically report the reception quality to the control station 400. The power control unit 433 can adjust the gain according to the difference between the reception quality and the target reception quality.

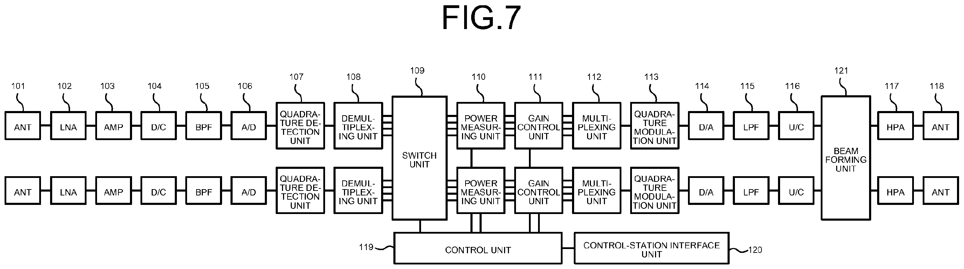

When a beam forming unit 121 is mounted at a post stage of the up-converter 116 as shown in FIG. 7, the beam forming unit 121 controls the phase and the amplitude of signals received from one or more up-converters 116. The signals are transmitted using the transmission antennas 118 of a phased array antenna type. FIG. 7 is a diagram showing a configuration example of the repeater 100 in the present embodiment. Signals of all the systems input to the beam forming unit 121 are combined and input to the high-power amplifier 117. Therefore, the power control unit 433 can perform the gain control described above according to the sum of electric powers of all the systems of the same sub-channel.

As in the first embodiment, when the gain control is changed, the power control unit 433 can cause the gain control unit 111 to increase or reduce the gain at any step width and notify the repeater 100 to bring the gain closer to the gain after the change.

As in the first embodiment, a part or all of the functions of the power control unit 433 and the frequency control unit 434 can be incorporated in the repeater 100. Consequently, time required for communication of the control information between the control station 400 and the repeater 100 is reduced. Therefore, it is possible to quickly cope with appearance/disappearance of the interference wave.

As explained above, in the present embodiment, in a process in which the transmitter transmits data to the receiver via the repeater, the control station, which controls the gain and the like of the repeater, estimates an interference amount due to the inter-modulation distortion from the power measurement values for the demultiplexed signals measured by the repeater and controls the gains of the demultiplexed signals such that deterioration in reception quality caused from the interference amount is minimized, specifically, calculates the power differences among adjacent demultiplexed signals, and increases the gain in order from a demultiplexed signal having the largest power difference (a demultiplexed signal having the smallest electric power with respect to an adjacent demultiplexed signal). Consequently, it is possible to suppress deterioration in the reception quality in the receiver due to the inter-modulation distortion that fluctuates every moment. Because excessive gain setting can be avoided, it is possible to effectively utilize the transmission power of the repeater.

Third Embodiment.

In the first embodiment, the gain is controlled such that the influence due to the interference wave in the uplink and the rain attenuation is reduced. In the second embodiment, the gain is controlled such that the influence of the inter-modulation distortion in the high-power amplifier 117 is reduced.

The gain control amount calculated in the first embodiment and the gain control amount calculated in the second embodiment do not always coincide with each other. The performances of the high-power amplifiers 117 mounted on the repeater 100 are different from each other. On the other hand, the gain control amount notified to the repeater 100 is one kind per demultiplexed signal.

Therefore, in the present embodiment, a method of setting, in the repeater 100, gain control amounts calculated according to different indexes is explained.

The configurations of a satellite communication system, the repeater 100, and the control station 400 in the present embodiment are the same as the configurations in the first and second embodiments. Therefore, explanation of the configurations is omitted. Note that, in the present embodiment, a method of determining a gain control amount notified by the control station 400 to the repeater 100 shown in FIG. 1 is different from the methods in the first and second embodiments. Therefore, in the following explanation, only the difference is explained.

When the gain control amount calculated in the first embodiment is represented as $G_{1i}$ and the gain control amount calculated in the second embodiment is represented as $G_{2i}$, in the present embodiment, as indicated by Formula (3), the power control unit 433 calculates a gain control amount $G_{3i}$ by multiplying the respective gain control amounts by any coefficients for weighting.

$$G_{3i} = \frac{1}{2}(a_1 G_{1i} + a_2 G_{2i}) \qquad (3)$$

With the above definition, for example, when an amplifier having a high inter-modulation distortion performance is used, the power control unit 433 only has to set a coefficient $a_2$ multiplied by the gain control amount $G_{2i}$ to 0. Other indexes can be combined. As a more general expression, a gain control amount can be determined as indicated by Formula (4).

$$G_{3i} = \frac{1}{N}\sum_{n=1}^{N} a_n G_{ni} \qquad (4)$$

As explained above, in the present embodiment, the gain control value obtained according to the different indexes are weighted to calculate one gain control amount. Consequently, it is possible to perform control taking into account a plurality of gain control amounts obtained according to the different indexes.

Industrial Applicability

As explained above, the relay control station, the repeater, and the interference suppressing method according to the present invention are useful for a radio communication system and, in particular, suitable for a system including a repeater that replays signals between a transmitter and a receiver.

Reference Signs List

100 repeater, 101 reception antenna, 102 low-noise amplifier, 103 variable amplifier, 104 down-converter, 105 band-pass filter, 106 analog-digital converter, 107 quadrature detection unit, 108 demultiplexing unit, 109 switch unit, 110 power measuring unit, 111 gain control unit, 112 multiplexing unit, 113 quadrature modulation unit, 114 digital-analog converter, 115 low-pass filter, 116 up-converter, 117 high-power amplifier, 118 transmission antenna, 119 control unit, 120 control-station interface unit, 121 beam forming unit, 200 transmitter, 300 receiver, 400 control station, 410 repeater interface unit, 420 transceiver interface unit, 430 scheduling unit, 431 call control unit, 432 transmission-system control unit, 433 power control unit, 434 frequency control unit.

**Claims**

1. A relay control station (400) that controls a repeater (100) in a communication system in which a transmitter (200) transmits data to a receiver (300) serving any beam via the repeater including one or more beams, demultiplexed signals being obtained by the repeater demultiplexing a reception signal received from the transmitter the relay control station comprising:

   a power control unit (433) that determines, on a basis of a ratio between each expected power value of the demultiplexed signals and power values of the demultiplexed signals measured by the repeater, a gain control amount provisional value for the demultiplexed signals and calculates a gain control value of the demultiplexed signals for the repeater on a basis of a ratio between a sum of the power values of the demultiplexed signals and a sum of products of the power values of the demultiplexed signals and the gain control amount provisional value, the ratio of the sums multiplied with the gain control amount provisional value, and

a repeater interface unit (410) that notifies the repeater of the gain control value calculated by the power control unit (433) as a control amount used for gain control performed on the demultiplexed signals by the repeater (100).

2. The relay control station (400) according to claim 1, wherein the power control unit (433) sets, as the gain control amount provisional value, a value obtained by raising the ratio between the expected power value and the measured power value to a power with a first adjustment coefficient.

3. The relay control station (400) according to claim 1, wherein the power control unit (433) sets, as the gain control amount provisional value, a value obtained by multiplying the ratio between the expected power value and the measured power value by a second adjustment coefficient based on priority of the transmitter (200).

4. The relay control station (400) according to claim 1, wherein the power control unit (433) calculates the gain control value by further using a coefficient for adjusting a coverage area of the any beam.

5. The relay control station (400) according to claim 1, wherein, when updating the gain control value, if a difference between a gain control value after update and a gain control value before update is larger than a specified value, the power control unit (433) sets a difference between a present gain control value in the repeater (100) and a gain control value notified to the repeater (100) to the specified value or less, controls the repeater interface unit (410), and notifies the repeater (100) of the gain control value a plurality of times from the repeater interface unit.

6. The relay control station (400) according to any one of claims 1 to 5, wherein the power control unit (433) sets, as the gain control value, an average of a value obtained by multiplying the gain control value by a first coefficient and a value obtained by multiplying a gain control value calculated according to another index by a second coefficient.

7. A repeater (100) in a communication system in which a transmitter (200) transmits data to a receiver (300) serving any beam via the repeater including one or more beams, the repeater (100) comprising:

a demultiplexing unit (108) that demultiplexes a reception signal received from the transmitter into a plurality of demultiplexed signals;
a measuring unit (110) that measures power values of the demultiplexed signals;
a power control unit (433) that determines, on a basis of a ratio between each expected power value of the demultiplexed signals and the measured power values of the demultiplexed signals, a gain control amount provisional value for the demultiplexed signals and calculates a gain control value of the demultiplexed signals on a basis of a ratio between a sum of the power values of the demultiplexed signals and a sum of products of the power values of the demultiplexed signals and the gain control amount provisional value, the ratio of the sums multiplied with the gain control amount provisional value; and
a gain control unit (111) that controls signal power of the demultiplexed signals on a basis of the gain control value calculated by the power control unit (433).

8. The repeater (100) according to claim 7, wherein the power control unit (433) sets, as the gain control amount provisional value, a value obtained by raising the ratio between the expected power value and the measured power value to a power with a first adjustment coefficient

9. The repeater (100) according to claim 7, wherein the power control unit (433) sets, as the gain control amount provisional value, a value obtained by multiplying the ratio between the expected power value and the measured power value by a second adjustment coefficient based on priority of the transmitter (200).

10. The repeater (100) according to claim 7, wherein the power control unit (433) calculates the gain control value by further using a coefficient for adjusting a coverage area of the any beam.

11. The repeater (100) according to claim 7, wherein, when updating the gain control value, if a difference between a gain control value after update and a gain control value before update is larger than a specified value, the power control unit (433) sets a difference between a present gain control value in the repeater (100) and the gain control value after update to the specified value or less and updates the gain control value a plurality of times.

12. The repeater (100) according to any one of claims 7 to 11, wherein the power control unit (433) sets, as the gain control value, an average of a value obtained by multiplying the gain control value by a first coefficient and a value obtained by multiplying a gain control value calculated according to another index by a second coefficient.

**13.** A gain control and interference suppressing method of a relay control station (400) that controls a repeater (100) in a communication system in which a transmitter (200) transmits data to a receiver (300) serving any beam via the repeater including one or more beams, the interference suppressing method comprising: demultiplexed signals being obtained by the repeater demultiplexing a reception signal received from the transmitter a gain-control-amount-provisional-value determining step of determining, on a basis of a ratio between each expected power value of the demultiplexed signals and power values of the demultiplexed signals measured by the repeater, a gain control amount provisional value for the demultiplexed signals, a gain-control-amount calculating step of calculating a gain control value of the demultiplexed signals for the repeater (100) on a basis of a ratio between a sum of the power values of the demultiplexed signals and a sum of products of the power values of the demultiplexed signals and the gain control amount provisional value, the ratio of the sums multiplied with the gain control amount provisional value; and

a gain-control-amount notifying step of notifying the repeater (100) of the calculated gain control value as a control amount used for gain control performed on the demultiplexed signals by the repeater (100).

**14.** The interference suppressing method according to claim 13, wherein the gain-control-amount-provisional-value determining step includes setting, as the gain control amount provisional value, a value obtained by raising the ratio between the expected power value and the measured power value to a power with a first adjustment coefficient.

**15.** The interference suppressing method according to claim 13, wherein the gain-control-amount-provisional-value determining step includes setting, as the gain control amount provisional value, a value obtained by multiplying the ratio between the expected power value and the measured power value by a coefficient based on priority of the transmitter (200).

**16.** The interference suppressing method according to claim 13, wherein the gain-control-amount calculating step includes calculating the gain control value by further using a coefficient for adjusting a coverage area of the any beam.

**17.** The interference suppressing method according to claim 13, wherein, when updating the gain control value, if a difference between a gain control value after update and a gain control value before update is larger than a specified value, the gain-control-amount notifying step includes setting a difference between a present gain control value in the repeater (100) and a gain control value notified to the repeater (100) to the specified value or less and notifying the repeater (100) of the gain control value a plurality of times.

**18.** The interference suppressing method according to any one of claims 13 to 17, wherein the gain-control-amount calculating step includes setting, as the gain control value, an average of a value obtained by multiplying the gain control value by a first coefficient and a value obtained by multiplying a gain control value calculated according to another index by a second coefficient.

**Patentansprüche**

**1.** Relaissteuerstation (400), die einen Repeater (100) in einem Kommunikationssystem steuert, in dem ein Übertrager (200) Daten an einen Empfänger (300) überträgt, bereitstellend (serving) einen Strahl über den Repeater, enthaltend einen oder mehrere Strahlen, wobei gedemultiplexte Signale durch den Repeater erhalten werden, der ein vom Übertrager empfangenes Empfangssignal demultiplext, wobei die Relaissteuerstation umfasst:

eine Leistungssteuerungseinheit (433), die auf einer Grundlage eines Verhältnisses zwischen jedem erwarteten Leistungswert der gedemultiplexten Signale und Leistungswerten der durch den Repeater gemessenen gedemultiplexten Signale einen vorläufigen Verstärkungssteuerungsbetragswert für die gedemultiplexten Signale bestimmt und einen Verstärkungssteuerungswert der gedemultiplexten Signale für den Repeater berechnet auf einer Grundlage eines Verhältnisses zwischen einer Summe der Leistungswerte der gedemultiplexten Signale und einer Summe der Produkte der Leistungswerte der gedemultiplexten Signale und des vorläufigen Verstärkungssteuerungsbetragswerts, wobei das Verhältnis der Summen mit dem vorläufigen Verstärkungssteuerungsbetragswert multipliziert ist, und
eine Repeaterschnittstelleneinheit (410), die dem Repeater den durch die Leistungssteuerungseinheit (433) berechneten Verstärkungssteuerungswert als einen Steuerungsbetrag bekanntgibt, der für die Verstärkungssteuerung verwendet wird, die durch den Repeater (100) auf die gedemultiplexten Signale durchgeführt wird.

**2.** Relaissteuerstation (400) nach Anspruch 1,

wobei die Leistungssteuerungseinheit (433) als den vorläufigen Verstärkungssteuerungsbetragswert einen Wert einstellt, der erhalten wird durch Erhöhung des Verhältnisses zwischen dem erwarteten Leistungswert und dem gemessenen Leistungswert auf eine Leistung mit einem ersten Anpassungskoeffizienten.

3. Relaissteuerstation (400) nach Anspruch 1,
   wobei die Leistungssteuerungseinheit (433) als den vorläufigen Verstärkungssteuerungsbetragswert einen Wert einstellt, der erhalten wird durch Multiplizieren des Verhältnisses zwischen dem erwarteten Leistungswert und dem gemessenen Leistungswert mit einem zweiten Anpassungskoeffizienten auf Grundlage von Priorität des Übertragers (200).

4. Relaissteuerstation (400) nach Anspruch 1,
   wobei die Leistungssteuerungseinheit (433) den Verstärkungssteuerungswert berechnet durch weiteres Verwenden eines Koeffizienten zum Anpassen eines Abdeckungsbereichs des einen Strahls.

5. Relaissteuerstation (400) nach Anspruch 1,
   wobei, wenn der Verstärkungssteuerungswert aktualisiert wird, falls eine Differenz zwischen einem Verstärkungssteuerungswert nach Aktualisierung und einem Verstärkungssteuerungswert vor Aktualisierung größer ist als ein spezifizierter Wert, die Leistungssteuerungseinheit (433) eine Differenz zwischen einem aktuellen Verstärkungssteuerungswert in dem Repeater (100) und einem Verstärkungssteuerungswert, der dem Repeater (100) bekanntgegeben wird, auf den spezifizierten Wert oder kleiner einstellt, die Repeaterschnittstelleneinheit (410) steuert und dem Repeater (100) den Verstärkungssteuerungswert mehrere Male von der Repeaterschnittstelleneinheit bekanntgibt.

6. Relaissteuerstation (400) nach einem der Ansprüche 1 bis 5, wobei die Leistungssteuerungseinheit (433) als den Verstärkungssteuerungswert einen Mittelwert eines Werts, der erhalten wird durch Multiplizieren des Verstärkungssteuerungswertes mit einem ersten Koeffizienten, und eines Werts, der erhalten wird durch Multiplizieren eines Verstärkungssteuerungswertes, der gemäß einem anderen Index berechnet wird, mit einem zweiten Koeffizienten, einstellt.

7. Repeater (100) in einem Kommunikationssystem, in dem ein Übertrager (200) Daten an einen Empfänger (300) überträgt, bereitstellend (serving) einen Strahl über den Repeater, enthaltend einen oder mehr Strahlen, wobei der Repeater (100) umfasst:

   eine Demultiplexereinheit (108), die ein vom Übertrager empfangenes Empfangssignal in eine Vielzahl von gedemultiplexten Signalen demultiplext;
   eine Messeinheit (110), die Leistungswerte der gedemultiplexten Signale misst;
   eine Leistungssteuerungseinheit (433), die auf einer Grundlage eines Verhältnisses zwischen jedem erwarteten Leistungswert der gedemultiplexten Signale und den gemessenen Leistungswerten der gedemultiplexten Signale einen vorläufigen Verstärkungssteuerungsbetragswert für die gedemultiplexten Signale bestimmt und einen Verstärkungssteuerungswert der gedemultiplexten Signale berechnet auf einer Grundlage eines Verhältnisses zwischen einer Summe der Leistungswerte der gedemultiplexten Signale und einer Summe von Produkten der Leistungswerte der gedemultiplexten Signale und dem vorläufigen Verstärkungssteuerungsbetragswert, wobei das Verhältnis der Summen mit dem vorläufigen Verstärkungssteuerungsbetragswert multipliziert ist; und
   eine Verstärkungssteuerungseinheit (111), die Signalleistung der gedemultiplexten Signale steuert auf einer Grundlage des durch die Leistungssteuerungseinheit (433) berechneten Verstärkungssteuerungswertes.

8. Repeater (100) nach Anspruch 7, wobei die Leistungssteuerungseinheit (433) als den vorläufigen Verstärkungssteuerungsbetragswert einen Wert einstellt, der erhalten wird durch Erhöhung des Verhältnisses zwischen dem erwarteten Leistungswert und dem gemessenen Leistungswert auf eine Leistung mit einem ersten Anpassungskoeffizienten.

9. Repeater (100) nach Anspruch 7, wobei die Leistungssteuerungseinheit (433) als den vorläufigen Verstärkungssteuerungsbetragswert einen Wert einstellt, der erhalten wird durch Multiplizieren des Verhältnisses zwischen dem erwarteten Leistungswert und dem gemessenen Leistungswert mit einem zweiten Anpassungskoeffizienten auf der Grundlage der Priorität des Übertragers (200).

10. Repeater (100) nach Anspruch 7, wobei die Leistungssteuerungseinheit (433) den Verstärkungssteuerungswert berechnet durch weiteres Verwenden eines Koeffizienten zum Anpassen eines Abdeckungsbereichs des einen Strahls.

11. Repeater (100) nach Anspruch 7, wobei, wenn der Verstärkungssteuerungswert aktualisiert wird, falls eine Differenz zwischen einem Verstärkungssteuerungswert nach Aktualisierung und einem Verstärkungssteuerungswert vor Aktualisierung größer ist als ein spezifizierter Wert, die Leistungssteuerungseinheit (433) eine Differenz zwischen einem aktuellen Verstärkungssteuerungswert im Repeater (100) und dem Verstärkungssteuerungswert nach Aktualisierung auf den spezifizierten Wert oder kleiner einstellt und den Verstärkungssteuerungswert mehrere Male aktualisiert.

12. Repeater (100) nach einem der Ansprüche 7 bis 11, wobei die Leistungssteuerungseinheit (433) als den Verstärkungssteuerungswert einen Mittelwert eines Wertes, der erhalten wird durch Multiplizieren des Verstärkungssteuerungswertes mit einem ersten Koeffizienten, und eines Wertes, der erhalten wird durch Multiplizieren eines Verstärkungssteuerungswertes, der gemäß einem anderen Index berechnet wird, mit einem zweiten Koeffizienten, einstellt.

13. Verstärkungssteuerungs- und Interferenzunterdrückungsverfahren einer Relaissteuerstation (400), die einen Repeater (100) in einem Kommunikationssystem steuert, in dem ein Übertrager (200) Daten an einen Empfänger (300) überträgt, bereitstellend (serving) einen Strahl über den Repeater, enthaltend einen oder mehr Strahlen, wobei das Interferenzunterdrückungsverfahren umfasst:

gedemultiplexte Signale werden durch den Repeater erhalten, demultiplexend ein vom Übertrager empfangenes Empfangssignal,
einen vorläufiger-Verstärkungssteuerungsbetragswert-Bestimmungsschritt des Bestimmens, auf einer Grundlage eines Verhältnisses zwischen jedem erwarteten Leistungswert der gedemultiplexten Signale und Leistungswerten der gedemultiplexten Signale, die durch den Repeater gemessen werden, eines vorläufigen Verstärkungssteuerungsbetragswerts für die gedemultiplexten Signale,
einen Verstärkungssteuerungsbetrag-Berechnungsschritt des Berechnens eines Verstärkungssteuerungswerts der gedemultiplexten Signale für den Repeater (100) auf einer Grundlage eines Verhältnisses zwischen einer Summe der Leistungswerte der gedemultiplexten Signale und einer Summe von Produkten der Leistungswerte der gedemultiplexten Signale und dem vorläufigen Verstärkungssteuerungsbetragswert, wobei das Verhältnis der Summen mit dem vorläufigen Verstärkungssteuerungsbetragswert multipliziert ist; und
einen Verstärkungssteuerungsbetrag-Bekanntgabeschritt des Bekanntgebens des berechneten Verstärkungssteuerungswerts an den Repeater (100) als einen Steuerungsbetrag, der für die Verstärkungssteuerung zu verwenden ist, die auf die gedemultiplexten Signale durch den Repeater (100) durchgeführt wird.

14. Interferenzunterdrückungsverfahren nach Anspruch 13, wobei der vorläufiger-Verstärkungssteuerungsbetragswert-Bestimmungsschritt das Einstellen, als den vorläufigen Verstärkungssteuerungsbetragswert, eines Werts umfasst, der erhalten wird durch Erhöhung des Verhältnisses zwischen dem erwarteten Leistungswert und dem gemessenen Leistungswert auf eine Leistung mit einem ersten Anpassungskoeffizienten.

15. Interferenzunterdrückungsverfahren nach Anspruch 13, wobei der vorläufiger-Verstärkungssteuerungsbetragswert-Bestimmungsschritt das Einstellen, als den vorläufigen Verstärkungssteuerungsbetragswert, eines Werts umfasst, der erhalten wird durch Multiplizieren des Verhältnisses zwischen dem erwarteten Leistungswert und dem gemessenen Leistungswert mit einen Koeffizienten auf der Grundlage der Priorität des Übertragers (200).

16. Interferenzunterdrückungsverfahren nach Anspruch 13, wobei der Verstärkungssteuerungsbetrag-Berechnungsschritt das Berechnen des Verstärkungssteuerungswerts durch weiteres Verwenden eines Koeffizienten zum Anpassen eines Abdeckungsbereichs des einen Strahls umfasst.

17. Interferenzunterdrückungsverfahren nach Anspruch 13, wobei, wenn der Verstärkungssteuerungswert aktualisiert wird, wenn eine Differenz zwischen einem Verstärkungssteuerungswert nach Aktualisierung und einem Verstärkungssteuerungswert vor Aktualisierung größer ist als ein spezifizierter Wert, der Verstärkungssteuerungsbetrag-Bekanntgabeschritt das Einstellen einer Differenz zwischen einem aktuellen Verstärkungssteuerungswert im Repeater (100) und einem Verstärkungssteuerungswert, der dem Repeater (100) bekanntgegeben wird, auf den spezifizierten Wert oder kleiner und das mehrere Male Bekanntgeben des Verstärkungssteuerungswerts an den Repeater (100) umfasst.

18. Interferenzunterdrückungsverfahren nach einem der Ansprüche 13 bis 17, wobei der Verstärkungssteuerungsbetrag-Berechnungsschritt das Einstellen, als den Verstärkungssteuerungswert, eines Mittelwerts eines Werts, der erhalten wird durch Multiplizieren des Verstärkungssteuerungswertes mit einem ersten Koeffizienten, und eines Werts, der erhalten wird durch Multiplizieren eines Verstärkungssteuerungsbetragswerts, der gemäß einem anderen Index berechnet wird, mit einem zweiten Koeffizienten umfasst.

**Revendications**

1. Station de commande de relais (400) qui commande un répéteur (100) dans un système de communication, dans lequel un émetteur (200) transmet des données à un récepteur (300) desservant un faisceau quelconque par l'intermédiaire du répéteur incluant un ou plusieurs faisceaux, dans lequel des signaux démultiplexés sont obtenus par le démultiplexage, mis en oeuvre par le répéteur, d'un signal de réception reçu en provenance de l'émetteur, la station de commande de relais comprenant :

   une unité de commande de puissance (433) qui détermine, sur la base d'un rapport entre chaque valeur de puissance attendue des signaux démultiplexés et des valeurs de puissance des signaux démultiplexés mesurées par le répéteur, une valeur provisoire de quantité de commande de gain pour les signaux démultiplexés, et qui calcule une valeur de commande de gain des signaux démultiplexés pour le répéteur, sur la base d'un rapport entre une somme des valeurs de puissance des signaux démultiplexés et une somme de produits des valeurs de puissance des signaux démultiplexés et de la valeur provisoire de quantité de commande de gain, le rapport des sommes étant multiplié par la valeur provisoire de quantité de commande de gain ; et
   une unité d'interface de répéteur (410) qui notifie, au répéteur, la valeur de commande de gain calculée par l'unité de commande de puissance (433), en tant qu'une quantité de commande utilisée pour une commande de gain mise en oeuvre sur les signaux démultiplexés par le répéteur (100).

2. Station de commande de relais (400) selon la revendication 1, dans laquelle l'unité de commande de puissance (433) définit, en tant que la valeur provisoire de quantité de commande de gain, une valeur obtenue en élevant le rapport entre la valeur de puissance attendue et la valeur de puissance mesurée à une puissance présentant un premier coefficient d'ajustement.

3. Station de commande de relais (400) selon la revendication 1, dans laquelle l'unité de commande de puissance (433) définit, en tant que la valeur provisoire de quantité de commande de gain, une valeur obtenue en multipliant le rapport entre la valeur de puissance attendue et la valeur de puissance mesurée par un second coefficient d'ajustement basé sur une priorité de l'émetteur (200).

4. Station de commande de relais (400) selon la revendication 1, dans laquelle l'unité de commande de puissance (433) calcule la valeur de commande de gain en utilisant en outre un coefficient pour ajuster une zone de couverture du faisceau quelconque.

5. Station de commande de relais (400) selon la revendication 1, dans laquelle, lors de la mise à jour de la valeur de commande de gain, si une différence entre une valeur de commande de gain après mise à jour et une valeur de commande de gain avant mise à jour est supérieure à une valeur spécifiée, l'unité de commande de puissance (433) définit une différence entre une valeur de commande de gain en cours dans le répéteur (100) et une valeur de commande de gain notifiée au répéteur (100), sur la valeur spécifiée ou une valeur inférieure, commande l'unité d'interface de répéteur (410), et notifie, au répéteur (100), la valeur de commande de gain, à plusieurs reprises, à partir de l'unité d'interface de répéteur.

6. Station de commande de relais (400) selon l'une quelconque des revendications 1 à 5, dans laquelle l'unité de commande de puissance (433) définit, en tant que la valeur de commande de gain, une moyenne d'une valeur obtenue en multipliant la valeur de commande de gain par un premier coefficient et d'une valeur obtenue en multipliant une valeur de commande de gain calculée selon un autre index par un second coefficient.

7. Répéteur (100) dans un système de communication, dans lequel un émetteur (200) transmet des données à un récepteur (300) desservant un faisceau quelconque par l'intermédiaire du répéteur incluant un ou plusieurs faisceaux, le répéteur (100) comprenant :

   une unité de démultiplexage (108) qui démultiplexe un signal de réception, reçu en provenance de l'émetteur, en une pluralité de signaux démultiplexés ;

une unité de mesure (110) qui mesure des valeurs de puissance des signaux démultiplexés ;

une unité de commande de puissance (433) qui détermine, sur la base d'un rapport entre chaque valeur de puissance attendue des signaux démultiplexés et les valeurs de puissance mesurées des signaux démultiplexés, une valeur provisoire de quantité de commande de gain pour les signaux démultiplexés, et qui calcule une valeur de commande de gain des signaux démultiplexés sur la base d'un rapport entre une somme des valeurs de puissance des signaux démultiplexés et une somme de produits des valeurs de puissance des signaux démultiplexés et de la valeur provisoire de quantité de commande de gain, dans lequel le rapport des sommes est multiplié par la valeur provisoire de quantité de commande de gain ; et

une unité de commande de gain (111) qui commande une puissance de signal des signaux démultiplexés sur la base de la valeur de commande de gain calculée par l'unité de commande de puissance (433).

8. Répéteur (100) selon la revendication 7, dans lequel l'unité de commande de puissance (433) définit, en tant que la valeur provisoire de quantité de commande de gain, une valeur obtenue en élevant le rapport entre la valeur de puissance attendue et la valeur de puissance mesurée à une puissance présentant un premier coefficient d'ajustement.

9. Répéteur (100) selon la revendication 7, dans lequel l'unité de commande de puissance (433) définit, en tant que la valeur provisoire de quantité de commande de gain, une valeur obtenue en multipliant le rapport entre la valeur de puissance attendue et la valeur de puissance mesurée par un second coefficient d'ajustement basé sur une priorité de l'émetteur (200).

10. Répéteur (100) selon la revendication 7, dans lequel l'unité de commande de puissance (433) calcule la valeur de commande de gain en utilisant en outre un coefficient pour ajuster une zone de couverture du faisceau quelconque.

11. Répéteur (100) selon la revendication 7, dans lequel, lors de la mise à jour de la valeur de commande de gain, si une différence entre une valeur de commande de gain après mise à jour et une valeur de commande de gain avant mise à jour est supérieure à une valeur spécifiée, l'unité de commande de puissance (433) définit une différence entre une valeur de commande de gain en cours dans le répéteur (100) et la valeur de commande de gain après mise à jour, sur la valeur spécifiée ou une valeur inférieure, et met à jour la valeur de commande de gain à plusieurs reprises.

12. Répéteur (100) selon l'une quelconque des revendications 7 à 11, dans lequel l'unité de commande de puissance (433) définit, en tant que la valeur de commande de gain, une moyenne d'une valeur obtenue en multipliant la valeur de commande de gain par un premier coefficient et d'une valeur obtenue en multipliant une valeur de commande de gain calculée selon un autre index par un second coefficient.

13. Procédé de commande de gain et de suppression de brouillage d'une station de commande de relais (400) qui commande un répéteur (100) dans un système de communication, dans lequel un émetteur (200) transmet des données à un récepteur (300) desservant un faisceau quelconque par l'intermédiaire du répéteur incluant un ou plusieurs faisceaux, le procédé de suppression de brouillage comprenant : des signaux démultiplexés qui sont obtenus, par le démultiplexage, mis en oeuvre par le répéteur, d'un signal de réception reçu en provenance de l'émetteur ;

une étape de détermination de valeur provisoire de quantité de commande de gain consistant à déterminer, sur la base d'un rapport entre chaque valeur de puissance attendue des signaux démultiplexés et des valeurs de puissance des signaux démultiplexés mesurées par le répéteur, une valeur provisoire de quantité de commande de gain pour les signaux démultiplexés ;

une étape de calcul de quantité de commande de gain consistant à calculer une valeur de commande de gain des signaux démultiplexés pour le répéteur (100) sur la base d'un rapport entre une somme des valeurs de puissance des signaux démultiplexés et une somme de produits des valeurs de puissance des signaux démultiplexés et de la valeur provisoire de quantité de commande de gain, dans lequel le rapport des sommes est multiplié par la valeur provisoire de quantité de commande de gain ; et

une étape de notification de quantité de commande de gain consistant à notifier, au répéteur (100), la valeur de commande de gain calculée, en tant qu'une quantité de commande utilisée pour une commande de gain mise en oeuvre sur les signaux démultiplexés par le répéteur (100).

14. Procédé de suppression de brouillage selon la revendication 13, dans lequel l'étape de détermination de valeur provisoire de quantité de commande de gain inclut l'étape consistant à définir, en tant que la valeur provisoire de quantité de commande de gain, une valeur obtenue en élevant le rapport entre la valeur de puissance attendue et la valeur de puissance mesurée à une puissance présentant un premier coefficient d'ajustement.

**15.** Procédé de suppression de brouillage selon la revendication 13, dans lequel l'étape de détermination de valeur provisoire de quantité de commande de gain inclut l'étape consistant à définir, en tant que la valeur provisoire de quantité de commande de gain, une valeur obtenue en multipliant le rapport entre la valeur de puissance attendue et la valeur de puissance mesurée par un coefficient basé sur une priorité de l'émetteur (200).

**16.** Procédé de suppression de brouillage selon la revendication 13, dans lequel l'étape de calcul de quantité de commande de gain consiste à calculer la valeur de commande de gain en utilisant en outre un coefficient pour ajuster une zone de couverture du faisceau quelconque.

**17.** Procédé de suppression de brouillage selon la revendication 13, dans lequel, lors de la mise à jour de la valeur de commande de gain, si une différence entre une valeur de commande de gain après mise à jour et une valeur de commande de gain avant mise à jour est supérieure à une valeur spécifiée, l'étape de notification de quantité de commande de gain inclut l'étape consistant à définir une différence entre une valeur de commande de gain en cours dans le répéteur (100) et une valeur de commande de gain notifiée au répéteur (100), sur la valeur spécifiée ou une valeur inférieure, et l'étape consistant à notifier, au répéteur (100), la valeur de commande de gain à plusieurs reprises.

**18.** Procédé de suppression de brouillage selon l'une quelconque des revendications 13 à 17, dans lequel l'étape de calcul de quantité de commande de gain inclut l'étape consistant à définir, en tant que la valeur de commande de gain, une moyenne d'une valeur obtenue en multipliant la valeur de commande de gain par un premier coefficient et d'une valeur obtenue en multipliant une valeur de commande de gain calculée selon un autre index par un second coefficient.

# FIG.1

# FIG.2

# FIG.3

REPEATER                          TRANSMITTER OR RECEIVER

| 410 REPEATER INTERFACE UNIT | 420 TRANSCEIVER INTERFACE UNIT |

430 SCHEDULING UNIT

| 431 CALL CONTROL UNIT | 433 POWER CONTROL UNIT |
| 432 TRANSMISSION-SYSTEM CONTROL UNIT | 434 FREQUENCY CONTROL UNIT |

# FIG.4

EP 2 961 082 B1

BEFORE GAIN CONTROL

AFTER GAIN CONTROL

INTERFERENCE WAVE

POWER MEASUREMENT
VALUE ($P_i$)

EXPECTED
RECEPTION
POWER ($P_{target,i}$)

#0 #1 #2 #3 #4 #5 #6 #7 #8 #9 #10 #11 #12

SUB-CHANNEL

FRE-
QUENCY

#0 #1 #2 #3 #4 #5 #6 #7 #8 #9 #10 #11 #12

SUB-CHANNEL

FRE-
QUENCY

# FIG.5

# FIG.6

EP 2 961 082 B1

BEFORE GAIN CONTROL

INTER-
MODULATION
DISTORTION

NOISE

#0 #1 #2 #3 #4 #5 #6 #7 #8 #9 #10 #11 #12

FRE-
QUENCY

SUB-CHANNEL

AFTER GAIN CONTROL

INTER-
MODULATION
DISTORTION

NOISE

#0 #1 #2 #3 #4 #5 #6 #7 #8 #9 #10 #11 #12

FRE-
QUENCY

SUB-CHANNEL

# FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120314824 A1
- US 20020142725 A1
- US 20120058719 A1
- US 20040071236 A

**Non-patent literature cited in the description**

- Transponder Power Minimization Utilizing Optimum Channelizer Gains. **JOHN J. KNAB.** IEEE Transactions on Aerospace and electronic systems. Defense Information Systems Agency, January 2012, vol. 48